# EUROPÄISCHE PATENTSCHRIFT

(11) **EP 3 500 395 B1**
(45) Veröffentlichungstag und Bekanntmachung des Hinweises auf die Patenterteilung: **14.04.2021**
(21) Anmeldenummer: 17783739.0
(22) Anmeldetag: 22.09.2017
(51) Int. Cl.: B23K 26/384, B23K 26/382, B23K 26/0622, F01D 5/18

(54) **DREISTUFIGER PROZESS ZUR KÜHLLUFTBOHRERZEUGUNG MITTELS NANOSEKUNDEN- UND MILLISEKUNDENLASER UND BAUTEIL**
3-STEP METHOD OF PRODUCING AIR COOLING HOLES USING A NANOSECOND AND MILLISECOND LASER AND WORKPIECE
PROCÉDÉ EN 3 ÉTAPES DE FABRICATION D'ORIFICES DE REFROIDISSEMENT PAR AIR UTLISANT UN LASER DANS LE DOMAINE DES NANOSECONDES ET DES MILLISECONDES ET PIÈCE OBTENUE

(30) Priorität: 17.10.2016 DE 102016220251
(43) Veröffentlichungstag der Anmeldung: 26.06.2019
(73) Patentinhaber: Siemens Energy Global GmbH & Co. KG, 81739 München (DE)
(72) Erfinder: BECK, Thomas, 16341 Panketal (DE); DIETRICH, Jens, 14612 Falkensee (DE); KATZURKE, Oliver, 12205 Berlin (DE)
(86) Internationale Anmeldenummer: PCT/EP2017/074064
(87) Internationale Veröffentlichungsnummer: WO 2018/072971

(56) Entgegenhaltungen:
- EP-A1- 1 806 203
- DE-A1- 10 063 309
- US-A1- 2012 102 959
- US-A1- 2013 020 294

## Beschreibung

Die Erfindung betrifft die Herstellung eines Durchgangslochs durch ein keramisches Schichtsystem und Bauteil.

Eine etablierte Prozesskette für das Bohren von Kühlluftbohrungen in Heißgasbauteile wie Turbinenschaufeln ist das Laserbohren mit gepulsten Lasersystemen im Millisekunden (ms)-Zeitbereich. Diese Pulsdauern werden benötigt, um genügend Energie im Puls zu haben, um auch tief bohren zu können. Dabei wird durch das gesamte Beschichtungssystem (Keramik/Metall) der Schaufel gebohrt. Anschließend werden mit einem Kurzpulslaser im Nanosekunden (ns)-Zeitbereich Formbohrungen (Diffusor) auf ausgewählte zylindrische Bohrungen angebracht. Auch dort wird im beschichteten Zustand durch alle Beschichtungen die Shape Geometrie durch Laserablation eingebracht.

Die Prozessreihenfolge ms- und danach ns-Bearbeitung ist zwingend vorgeschrieben, da im umgekehrten Fall Abbrand-Produkte und Schmelzrückstände den zuvor erzeugten Shape verunreinigen würden. Dadurch wäre dessen Ausströmverhalten nicht mehr gewährleitstet.

Nun hat sich bei detaillierten Untersuchungen gezeigt, dass beim Bohren mit dem ms-Laser lange Risse am Interface der keramischen Beschichtung (TBC) zur MCrAlY-Schicht entstehen können. Diese Risse könnten ein Auslöser für frühzeitiges Versagen der TBC im Betrieb sein.

Die EP 1 806 203 A1, die EP 2 853 338 A1, die EP 1 869 290 B1 sowie EP 1 973 688 B1 offenbaren Verfahren zur Herstellung eines Durchgangslochs durch ein keramisches Schichtsystem mit dem ein Millisekundenlaser verwendet wird, um Keramik zu entfernen Der Oberbegriff des Anspruchs 1 basiert auf der EP 1 806 203 A1.

Es ist daher Aufgabe der Erfindung, o.g. Problem zu lösen.

Die Aufgabe wird gelöst durch ein Verfahren gemäß Anspruch 1.

In den Unteransprüchen sind weitere Maßnahmen aufgelistet. Vorteilhafte Prozesskette:
1. Komplettes Beschichten des Bauteils zur Herstellung eines keramischen Schichtsystems
2. Abtragen eines Teils einer keramischen Schicht (TBC) im Bereich des zukünftigen Lochs mit ns-Laser,
3. Bohren durch die zuvor vorbereitete (unter 2.) Stelle mit ms-Laser,
4. Einbringen der Shapes (Diffusor) mit ns-Laser.

Alle drei beschriebenen Bohrprozesse (2. - 4.) werden vorzugsweise in einer Aufspannung durchgeführt. Die Position des Lochs ist durch den 2. Prozessschritt eindeutig definiert und wird in Prozessschritt 3. und 4. wieder verwendet.

Es wird also im Bereich des späteren Lochs die TBC mit einer Toleranz von 0,1mm - 0,3mm umlaufend entfernt. Die verwendeten ns-Pulse sind so kurz, dass keine Schädigung des Interface zwischen TBC und Substrat oder unterliegenden Schichten auftritt.

Die Qualität der Löcher ist besser.

### Es zeigen:

- Figur 1: ein keramisches Schichtsystem,
- Figur 2, 6: eine Geometrie eines herzustellenden Durchgangslochs,
- Figur 3-5, 7-9: Herstellungsschritte und das erfindungsgemäße Verfahren,
- Figur 10: eine Turbinenschaufel.

Die Beschreibung und die Figuren stellen nur Ausführungsbeispiele der Erfindung dar.

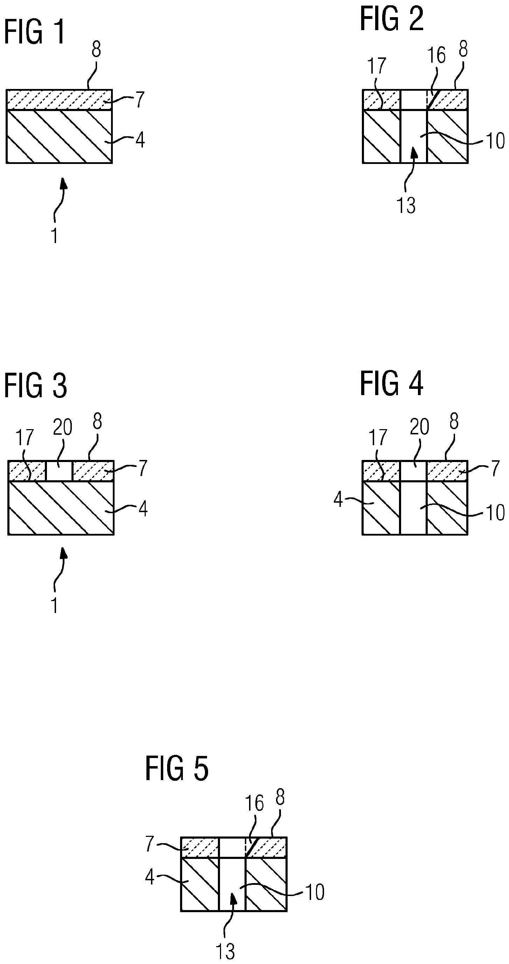

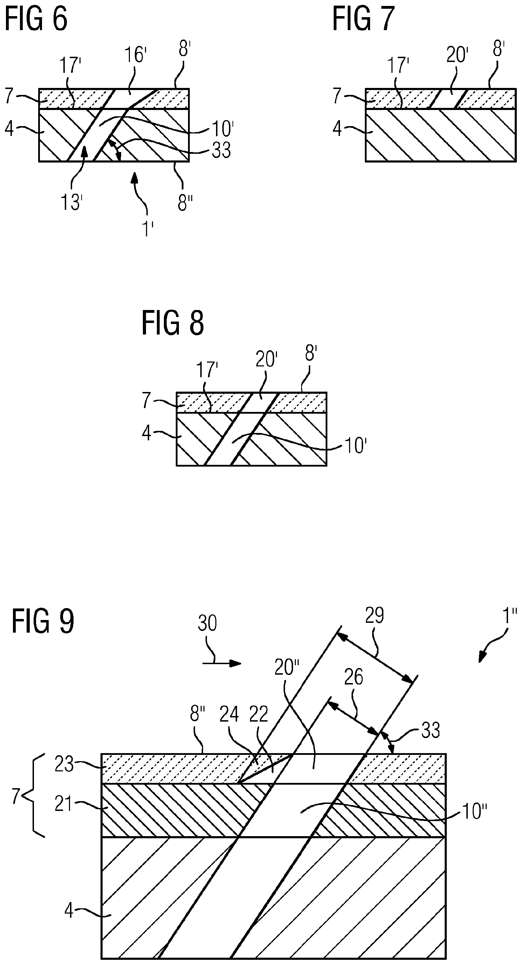

Figur 1 zeigt ein keramisches Schichtsystem oder Bauteil 1, 1', 1" (Fig. 6, 9) .

Das keramische Schichtsystem 1, 1', 1" weist auf zumindest ein insbesondere metallisches Substrat 4, insbesondere aus einer Nickelbasissuperlegierung, auf der ein oder mehrere Schichten, insbesondere eine äußere keramische Schicht 7 angeordnet sind, die insbesondere die äußerste keramische Schicht 7 darstellt.

Die unteren Schichten können eine metallische Haftvermittlerschicht, insbesondere auf der Basis NiCoCrAlY und/oder eine einlagige keramische Schicht einer zweilagigen keramischen Wärmedämmschicht (TBC) sein.

Die äußere oder äußerste keramische Wärmedämmschicht 7, 23 (Fig. 9) kann Zirkonoxid und/oder Pyrochlor aufweisen.

Die keramischen Schichten 7, 23 stellen insbesondere die äußersten Schichten dieses keramischen Schichtsystems 1, 1', 1" dar.

In Figur 2 ist im Querschnitt ein Durchgangsloch 13 gezeigt, das mittels des erfindungsgemäßen Verfahrens hergestellt werden soll.

Das Durchgangsloch 13, 13' (Fig. 6) weist im Inneren einen, insbesondere symmetrischen oder zylindrischen inneren Anteil 10, 10' (Fig. 6) (metering hole) auf, der sich größtenteils im Substrat 4 befindet.

Zumindest in der keramischen Schicht 7, 23 ist ein Diffusor 16, 16' (die gestrichelte Linie deutet nur den Anteil der Vergrößerung des inneren Anteils 10 für den Diffusor an) vorhanden, der von der Geometrie bzw. Querschnitt des "metering hole" 10 deutlich abweicht, indem er eine Verbreiterung darstellt.

Der innere Anteil 10, 10', 10" kann auch in einem Winkel 33 zur Oberfläche 17 verlaufen (Fig. 6, 9). Die Symmetrie bezieht sich immer auf die Längsausrichtung des inneren Anteils 10, 10', 10".

Erfindungsgemäß wird zuerst mittels eines Nanosekundenlasers mittels Pulsen im Nanosekundenbereich bis 200ns ein Anteil 20, 20' des Diffusors 16, 16' in der keramischen Schicht 7, 23 bis zum Substrat 4 hin entfernt (Fig. 3).

Dieser Anteil 20, 20' entspricht in seiner Form nicht der Endgeometrie des Diffusors 16, sondern im Querschnitt der des inneren Anteils 10, 10' gemäß Figur 2, 6.

Dann wird mittels eines Millisekundenlasers der untere Anteil, d.h. das "metering hole" 10, 10', 10" gemäß Figur 2 hergestellt (Fig. 4).

In einem letzten Schritt (Fig. 5) wird wiederum mittels eines Nanosekundenlasers mittels Pulsen im Nanosekundenbereich, insbesondere mit bis 200 ns die Endgeometrie des Diffusors 16 in der keramischen Schicht 7 hergestellt.

Im Gegensatz zum Stand der Technik wird hier bewusst ein Nanosekundenlaser verwendet, um den Diffusor 16, 16' in seiner endkonturnahen Form 20, Fig. , 20', 20" (Fig. 7, 9) erzustellen. Im Stand der Technik wurde dazu immer ein Millisekundenlaser verwendet.

Folgende Parameter für den Nanosekundenlaser sind vorteilhaft:
die Pulsdauer beträgt 50ns - 100ns,
und/oder
die Leistung beträgt 50kW - 150kW,
und/oder
die Energie beträgt 8mJ - 20mJ,
und/oder
die Frequenz beträgt zwischen 10kHz - 40kHz.

Besonders vorteilhaft für den Nanosekundenlaser sind folgende Parameter:
die Pulsdauer beträgt 100ns,
und/oder
die Leistung beträgt 100kW,
und/oder
die Energie beträgt 10mJ,
und/oder
die Frequenz beträgt 10kHz.

Die Pulspause beträgt vorzugsweise beim Nanosekundenlaser 100µs.

Folgende Parameter sind vorteilhaft für den Millisekundenlaser:
die Pulsdauer beträgt 0,5ms - 1,5ms,
und/oder
die Leistung beträgt 8kW - 30kW,
und/oder
die Energie beträgt 4J - 50J,
und/oder
die Frequenz zwischen beträgt 4kHz - 25kHz.

Besonders vorteilhaft für den Millisekundenlaser ist:
die Pulsdauer beträgt 0,6ms,
und/oder
die Leistung beträgt 15kW,
und/oder
die Energie beträgt 9J,
und/oder
die Frequenz beträgt 10Hz.

Die Pulspause beträgt vorzugsweise beim Millisekundenlaser 0,1s.

Die Figur 6 zeigt in analoger Weise zu Figur 2 bzw. 5 ein Durchgangsloch 13', bei dem der innere zylindrische Anteil 10' unter einem Winkel 33 zur äußeren Oberfläche 8' oder inneren Oberfläche 8" des Schichtsystems 1' verläuft.

Erfindungsgemäß wird auch in diesem Fall die gewünschte Endgeometrie gemäß Figur 6 zu erreichen.

Zuerst wird ein Anteil 20' in der äußeren Schicht 7, zumindest in der keramischen Schicht erzielt, der unter einem Winkel 33 zur Oberfläche 8' verläuft.

Im zweiten Schritt wird ähnlich wie zu Figur 4 beschrieben der innere zylindrische Anteil 10' erzeugt (Figur 8). Im letzten Schritt wird der Diffusor 16' erzeugt.

In Figur 9 ist ein weiteres Schichtsystem 1" (Bauteil) aufgelistet, bei dem die keramische Schicht 7 näher dargestellt ist mit einer metallischen Schicht 21 auf dem Substrat 4 und einer keramischen Schicht (TBC 23) als äußerste Schicht auf der metallischen Haftvermittlerschicht 21.

In Figur 9 ist zumindest in dem keramischen Anteil 23 der Beschichtung 7 der innere Durchmesser 29 des Anteils 20" insbesondere mindestens 10%, ganz insbesondere mindestens 20% größer als der innere Durchmesser 26 des inneren Anteils 10" in der metallischen Schicht 21 oder des inneren Anteils 10". Das Bauteil 1" wird in eine Überströmrichtung 30 überströmt, wobei das Durchgangsloch 13' in Überströmrichtung 30 gekippt verläuft. Das Aufmaß 21 ist in Strömungsrichtung 30 gesehen am Anfang ausgebildet und nicht in der Verbreiterung des Diffusors 16'.

Damit ist quasi ein Überhang 24 der TBC 23 über der metallischen Haftvermittlerschicht 21 gegeben. Der innere Anteil 10" erstreckt sich dann durch metallische Schicht 21 und Substrat 4. Ausgehend von Figur 9 wird dann ebenso noch weiterhin der Diffusoranteil abgetragen, wie es in Figur 6 dargestellt ist.

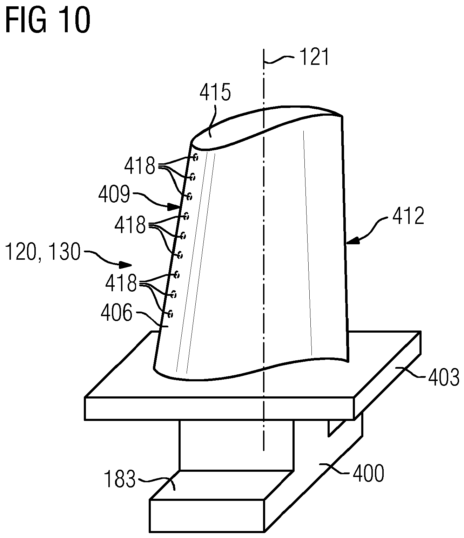

Die Figur 10 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichtemachen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0, 4Y-1, 5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Herstellung eines Durchgangslochs (13, 13') in einem keramischen Schichtsystem (1, 1', 1"), das (1, 1', 1") zumindest aufweist:
ein Substrat (4),
insbesondere ein metallisches Substrat (4) und
zumindest eine äußere keramische Schicht (7, 23),
insbesondere zumindest eine äußerste keramische Schicht (7, 23),
wobei das Durchgangsloch (13, 13') einen inneren Anteil (10, 10', 10") aufweist,
der symmetrisch,
insbesondere zylindrisch,
im Querschnitt ist,
sowie einen Diffusor (16, 16'),
der eine Verbreiterung des inneren Anteils (10, 10', 10") an der äußeren Oberfläche (8) der keramischen Schicht (7, 23) darstellt,
**dadurch gekennzeichnet, dass** zuerst mittels eines Nanosekundenlasers mittels Nanosekundenpulsen ein Anteil (20, 20') einer Endgeometrie des Diffusors (16, 16') zumindest in der äußersten keramischen Schicht (7, 23) bis zum Substrat (4) hergestellt wird,
dass dann ein Millisekundenlaser verwendet wird, um den inneren Anteil (10, 10') des Durchgangslochs (13, 13') mittels Millisekundenpulsen mit einer Pulslänge von 0,5ms bis zum Millisekundenbereich im Substrat (4) vollständig in seiner Endgeometrie zu erzeugen, und dass in einem letzten Arbeitsschritt der Diffusor (16, 16') in seiner Endgeometrie zumindest in der keramischen Schicht (7, 23) mittels des Nanosekundenlasers mittels Nanosekundenpulsen hergestellt wird.

2. Verfahren nach Anspruch 1,
bei dem für den Nanosekundenlaser
die Pulsdauer 50ns - 100ns beträgt,
und/oder
die Leistung 50kW - 150kW beträgt,
und/oder
die Energie 8mJ - 20mJ beträgt,
und/oder
die Frequenz zwischen 10kHz - 40kHz beträgt.

3. Verfahren nach Anspruch 2,
bei dem die Pulsdauer 100ns beträgt
und/oder
die Leistung 100kW beträgt
und/oder
die Energie 10mJ beträgt
und/oder
die Frequenz 10kHz beträgt.

4. Verfahren nach einem der Ansprüche 2 oder 3, bei dem die Pulspausen 100ps betragen.

5. Verfahren nach einem der Ansprüche 1, 2, 3 oder 4,
bei dem für den Millisekundenlaser
die Pulsdauer 0,5ms - 1,5ms beträgt,
und/oder
die Leistung 8kW - 30kW beträgt,
und/oder
die Energie 4J - 50J beträgt,
und/oder
die Frequenz zwischen 4kHz - 25kHz beträgt.

6. Verfahren nach einem der Ansprüche 1, 2, 3, 4
oder 5,
bei dem für den Millisekundenlaser
die Pulsdauer 0,6ms beträgt
und/oder
die Leistung 15kW
beträgt
und/oder
die Energie 9J
beträgt
und/oder
die Frequenz 10Hz beträgt.

7. Verfahren nach einem der Ansprüche 5 oder 6, bei dem die Pulspausen 0,1s betragen.

8. Verfahren nach einem der Ansprüche 1, 2, 3, 4, 5, 6 oder 7, bei dem der Anteil (20") des Diffusors (10) mit einem Aufmaß im Querschnitt gegenüber dem inneren Anteil (10") des Durchgangslochs hergestellt wird.

9. Verfahren nach einem der Ansprüchen 1, 2, 3, 4, 5, 6, 7 oder 8,
bei dem ein Durchgangsloch (13, 13') in einem keramischen Schichtsystem (1, 1', 1") eines Turbinenbauteils (120, 130) erzeugt wird.

## Claims

1. Method for producing a through-hole (13, 13') in a ceramic layer system (1, 1', 1''),
which (1, 1', 1'') has at least:
a substrate (4),
in particular a metallic substrate (4), and
at least one outer ceramic layer (7, 23),
in particular at least one outermost ceramic layer (7, 23),
wherein the through-hole (13, 13') has an inner part (10, 10', 10")
which is symmetrical,
in particular cylindrical,
in a cross section,
and a diffusor (16, 16'),
which represents a widening of the inner part (10, 10', 10'') on the outer surface (8) of the ceramic layer (7, 23), **characterized in that**
a part (20, 20') of a final geometry of the diffusor (16, 16') is produced first at least in the outermost ceramic layer (7, 23) as far as the substrate (4) by means of a nanosecond laser by means of nanosecond pulses,
**in that** a millisecond laser is then used
in order to fully produce the inner part (10, 10') of the through-hole (13, 13') in the final geometry thereof by means of millisecond pulses with a pulse length of 0.5 ms up to the millisecond range in the substrate (4), and **in that**,
in a final working step, the diffusor (16, 16') is produced in its final geometry at least in the ceramic layer (7, 23) by means of the nanosecond laser by means of nanosecond pulses.

2. Method according to Claim 1,
wherein, for the nanosecond laser,
the pulse duration is 50 ns - 100 ns,
and/or
the power is 50 kW - 150 kW,
and/or
the energy is 8 mJ - 20 mJ,
and/or
the frequency is between 10 kHz - 40 kHz.

3. Method according to Claim 2,
wherein the pulse duration is 100 ns,
and/or
the power is 100 kW,
and/or
the energy is 10 mJ,
and/or
the frequency is 10 kHz.

4. Method according to one of Claims 2 and 3,
wherein the pulse pauses are 100 µs.

5. Method according to one of Claims 1, 2, 3 and 4,
wherein, for the millisecond laser,
the pulse duration is 0.5 ms - 1.5 ms,
and/or
the power is 8 kW - 30 kW,
and/or
the energy is 4 J - 50 J,
and/or
the frequency is between 4 kHz - 25 kHz.

6. Method according to one of Claims 1, 2, 3, 4 and 5, wherein, for the millisecond laser,
the pulse duration is 0.6 ms,
and/or
the power is 15 kW,
and/or
the energy is 9 J,
and/or
the frequency is 10 Hz.

7. Method according to one of Claims 5 and 6,
wherein the pulse pauses are 0.1 s.

8. Method according to one of Claims 1, 2, 3, 4, 5, 6 and 7,
wherein the part (20'') of the diffusor (10) is produced with an oversize in cross section relative to the inner part (10'') of the through-hole.

9. Method according to one of Claims 1, 2, 3, 4, 5, 6, 7 and 8,
wherein a through-hole (13, 13') is produced in a ceramic layer system (1, 1', 1'') of a turbine component (120, 130).

## Revendications

1. Procédé de production d'un trou (13, 13') traversant dans un système (1, 1', 1'') stratifié en céramique qui (1, 1', 1") a au moins :
un substrat (4),
notamment un substrat (4) métallique et
au moins une couche (7, 23) extérieure en céramique,
notamment au moins une couche (7, 23) la plus à l'extérieur en céramique,
dans lequel le trou (13, 13') traversant a une partie (10, 10', 10'') intérieure,
qui en section transversale est
symétrique,
notamment cylindrique,
ainsi qu'un diffuseur (16, 16'),
qui représente un élargissement de la partie (10, 10', 10'') intérieure à la surface (8) extérieure de la couche (7, 23) en céramique,
**caractérisé en ce que** l'on produit d'abord au moyen d'un laser à nanoseconde au moyen d'impulsions de nanoseconde une partie (20, 20') d'une géométrie définitive du diffuseur (16, 16') au moins dans la couche (7, 23) la plus à l'extérieur en céramique jusqu'au substrat (4),
**en ce qu'**ensuite on utilise un laser à milliseconde pour produire la partie (10, 10') intérieure du trou (13, 13') traversant au moyen d'impulsions de milliseconde ayant une longueur d'impulsion de 0,5 ms jusqu'au domaine de la milliseconde dans le substrat (4) complètement dans sa géométrie définitive et
**en ce que**, dans un dernier stade de travail, on produit le diffuseur (16, 16') dans sa géométrie définitive au moins dans la couche (7, 23) en céramique au moyen du laser à nanoseconde au moyen d'impulsions de nanoseconde.

2. Procédé suivant la revendication 1,
dans lequel pour le laser à nanoseconde
la durée d'impulsion va de 50 ns à 100 ns,
et/ou
la puissance va de 50 kW à 150 kW,
et/ou
l'énergie va de 8mJ à 20 mJ,
et/ou
la fréquence est comprise entre 10kHz et 40kHz.

3. Procédé suivant la revendication 2,
dans lequel la durée d'impulsion est de 100 ns
et/ou
la puissance est de 100kW
et/ou
l'énergie est de 10 mJ
et/ou
la fréquence est de 10kHz.

4. Procédé suivant l'une des revendications 2 ou 3,
dans lequel les intervalles entre les impulsions sont de 100 µs.

5. Procédé suivant l'une des revendications 1, 2, 3 ou 4,
dans lequel pour le laser à milliseconde
la durée d'impulsion va de 0,5ms à 1,5ms,
et/ou
la puissance va de 8kW à 30kW,
et/ou
l'énergie va de 4J à 50J,
et/ou
la fréquence est comprise entre 4kHz et 25kHz.

6. Procédé suivant l'une des revendications 1, 2, 3, 4 ou 5,
dans lequel pour le laser à milliseconde
la durée d'impulsion est de 0,6ms
et/ou
la puissance est de 15kW
et/ou
l'énergie est de 9J
et/ou
la fréquence est de 10Hz.

7. Procédé suivant l'une des revendications 5 ou 6,
dans lequel les intervalles entre les impulsions sont de 0,1s.

8. Procédé suivant l'une des revendications 1, 2, 3, 4, 5, 6 ou 7,
dans lequel on produit la partie (20'') du diffuseur (10) avec un excédent de section transversale par rapport à la partie (10'') intérieure du trou traversant.

9. Procédé suivant l'une des revendications 1, 2, 3, 4, 5, 6, 7 ou 8,
dans lequel on produit un trou (13, 13'') traversant dans un système (1, 1', 1'') stratifié en céramique d'une pièce (120, 130) de turbine.
